# EUROPEAN PATENT APPLICATION

(11) **EP 4 424 874 A1**
(43) Date of publication of application: **04.09.2024**
(21) Application number: 23205467.6
(22) Date of filing: 24.10.2023
(51) Int. Cl.: C25B 1/04, C25B 9/65, C25B 9/73, C25B 13/07

(54) **ANODE-SIDE SEPARATOR AND WATER ELECTROLYSIS DEVICE**

(30) Priority: 30.11.2022 JP 2022191252
(71) Applicant: TOYOTA JIDOSHA KABUSHIKI KAISHA, Toyota-shi, Aichi-ken, 471-8571 (JP)
(72) Inventor: KOGURE, Tomonari, Toyota-shi, 471-8571 (JP); MORI, Yui, Toyota-shi, 471-8571 (JP); YOSHIMURA, Joji, Toyota-shi, 471-8571 (JP); HIRANO, Masaki, Toyota-shi, 471-8571 (JP)
(74) Representative: J A Kemp LLP

(57) **Abstract**

An anode-side separator (12) that is used in a water electrolysis device (100) includes a metal backing (8) made of titanium or stainless steel, an electroconductive oxide film (9) provided on a surface (8s) of the metal backing (8), the electroconductive oxide film (9) containing indium tin oxide, and a noble metal film (7) provided on a surface (9s) of the electroconductive oxide film (9), the noble metal film (7) containing platinum.

## Description

### BACKGROUND OF THE INVENTION

### 1. Field of the Invention

The invention relates to an anode-side separator used in a water electrolysis device and a water electrolysis device including the anode-side separator.

### 2. Description of Related Art

In recent years, there is known a water electrolysis device, in which water electrolysis cells that use an electrolyte membrane such as a solid polymer electrolyte membrane are stacked, as a water electrolysis device for producing hydrogen by performing electrolysis of a raw material such as water. In the water electrolysis cells, an anode catalyst layer and a cathode catalyst layer are provided on one face and on another face of the electrolyte membrane, respectively, an anode power feeder and an anode-side separator are laminated on the anode catalyst layer, and a cathode power feeder and a cathode-side separator are laminated on the cathode catalyst layer, for example.

The anode-side separator requires high electroconductivity, due to functioning to conduct electricity to the anode catalyst layer. Also, when a metal backing is used from the perspective of strength and the like, corrosion resistance becomes a problem since the metal backing easily corrodes. Accordingly, a configuration is employed for the anode-side separator in which a conductive layer having high electroconductivity and excellent corrosion resistance is provided on a surface of the metal backing. For example, an anode-side separator described in Japanese Unexamined Patent Application Publication No. 2018-127707 (JP 2018-127707 A) includes a metal backing made of titanium or the like, and a noble metal layer (electroconductive layer) made of Au that is directly laminated on the metal backing. Thus, the anode-side separator has high electroconductivity and high corrosion resistance, and moreover the surface roughness of the metal backing is adjusted, thereby improving adhesion and so forth between the metal backing and the noble metal layer. Further, members making up an anode described in Japanese Unexamined Patent Application Publication No. 2013-231208 (JP 2013-231208 A) include an electrode backing (metal backing) made of a metal such as aluminum or the like, and an electroconductive oxide film (electroconductive layer) that is provided on the surface of the electrode backing and forms a nanostructure.

### SUMMARY OF THE INVENTION

The anode-side separator described in JP 2018-127707 A has a noble metal layer on the surface of the metal backing, and accordingly has excellent corrosion resistance, but is costly, and accordingly employing in actual products is difficult. In order to deal with this, employing an arrangement in which an inexpensive electroconductive oxide film is formed on the surface of the metal backing, such as the member described in JP 2013-231208 A, is being considered as an anode-side separator having an electroconductive layer on the surface of a metal backing. On the other hand, in the anode-side separator in which the electroconductive oxide film is provided on the surface of the metal backing, contact resistance of the electroconductive oxide film is not sufficiently low, and accordingly there is demand for improved electroconductivity.

The invention provides an anode-side separator used in a water electrolysis device, and a water electrolysis device including an anode-side separator, in which electroconductivity can be improved.

An anode-side separator according to a first aspect of the invention is used in a water electrolysis device and includes a metal backing made of titanium or stainless steel, an electroconductive oxide film provided on a surface of the metal backing, the electroconductive oxide film containing indium tin oxide, and a noble metal film provided on a surface of the electroconductive oxide film, the noble metal film containing platinum.

In the anode-side separator according to the first aspect of the invention, a thickness of the noble metal film may be less than 10 nm.

In the anode-side separator according to the first aspect of the invention, the thickness of the noble metal film may be 3 nm or more and 5 nm or less.

In the anode-side separator according to the first aspect of the invention, a thickness of the electroconductive oxide film may be 0.05 µm or more and 0.8 µm or less.

In the anode-side separator according to the first aspect of the invention, the thickness of the electroconductive oxide film may be 0.3 µm or more and 0.8 µm or less.

A water electrolysis device according to a second aspect of the invention may include the anode-side separator.

According to the invention, electroconductivity can be improved.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a disassembled cross-sectional view schematically illustrating the configuration of a water electrolysis cell, which is a component unit of a water electrolysis device according to a first embodiment, and which is provided with an anode-side separator according to the first embodiment;
FIG. 2 is an enlarged view of a portion X in FIG. 1; and
FIG. 3 is a schematic view of the water electrolysis device according to the first embodiment.

### DETAILED DESCRIPTION OF EMBODIMENTS

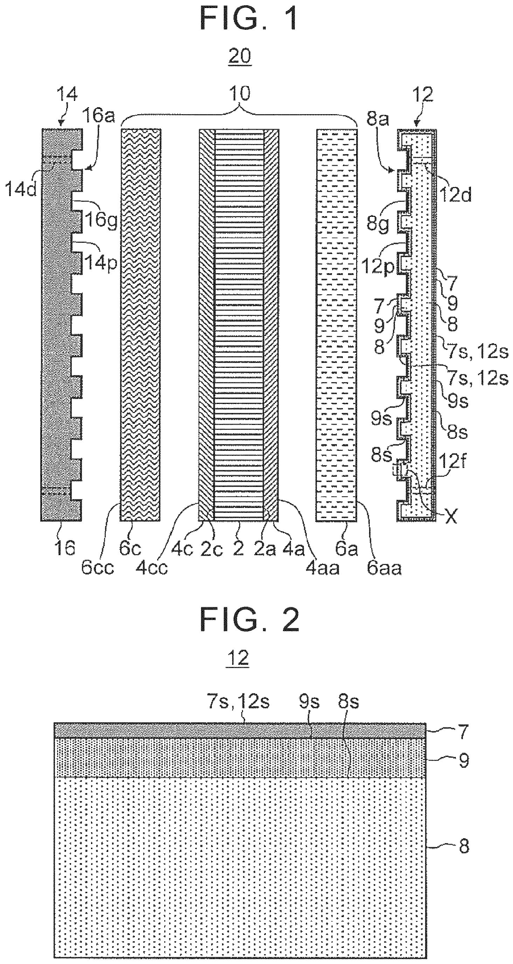

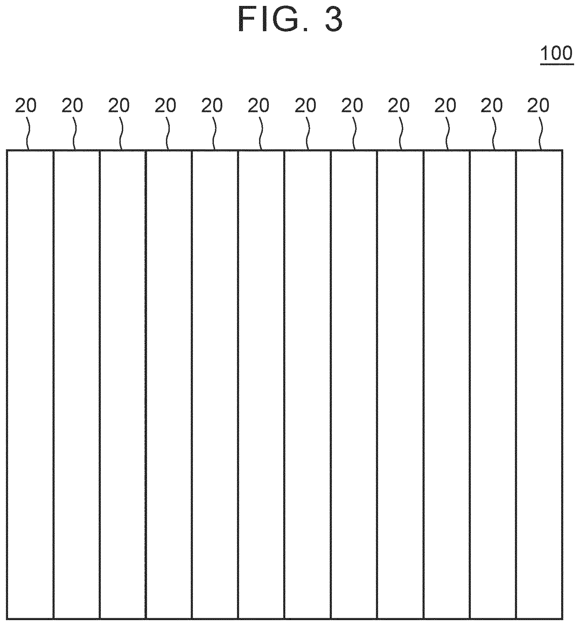

First, an overview of an anode-side separator and a water electrolysis device according to an embodiment will be described by exemplifying a first embodiment. FIG. 1 is a disassembled cross-sectional view schematically illustrating a configuration of a water electrolysis cell, which is a component unit of the water electrolysis device according to the first embodiment, and which is provided with the anode-side separator according to the first embodiment. FIG. 2 is an enlarged view of a portion X in FIG. 1. FIG. 3 is a schematic view of the water electrolysis device according to the first embodiment. In FIG. 3, end plates that are described later and the like are omitted from illustration.

As illustrated in FIG. 3, the water electrolysis device 100 according to the first embodiment is made up by stacking a plurality of sets of water electrolysis cells 20. As illustrated in FIG. 1, each water electrolysis cell 20 is a solid polymer type water electrolysis cell that includes a membrane electrode assembly 10, and an anode-side separator 12 according to the first embodiment and a cathode side separator 14, between which the membrane electrode assembly 10 is interposed.

The membrane electrode assembly 10 includes a solid polymer electrolyte membrane 2, an anode catalyst layer 4a and a cathode catalyst layer 4c provided on one principal face 2a and the other principal face 2c of the solid polymer electrolyte membrane 2, respectively, an anode power feeder 6a laminated on a principal face 4aa of the anode catalyst layer 4a, and a cathode power feeder 6c laminated on a principal face 4cc of the cathode catalyst layer 4c. The anode-side separator 12 is laminated on a principal face 6aa of the anode power feeder 6a, and the cathode side separator 14 is laminated on a principal face 6cc of the cathode power feeder 6c.

As illustrated in FIGS. 1 and 2, the anode-side separator 12 includes a metal backing 8 made of pure titanium, an electroconductive oxide film 9 containing indium tin oxide (ITO) provided over a surface 8s of the metal backing 8 in its entirety, and a noble metal film 7 containing platinum (Pt) that is provided over a surface 9s of the electroconductive oxide film 9 in its entirety. The thickness of the noble metal film 7 is in the range from 3 nm to 5 nm. In the anode-side separator 12, grooves 8g for fluid passage are provided on a principal face 8a side of the metal backing 8 facing the solid polymer electrolyte membrane 2, thereby providing fluid passages 12p, and a water feed port 12f and a water drain port 12d are provided communicating with the fluid passages 12p.

The cathode-side separator 14 has a metal backing 16 made of any one of titanium, stainless steel, and aluminum. In the cathode-side separator 14, grooves 16g for fluid passage are provided on a principal face 16a side of the metal backing 16 facing the solid polymer electrolyte membrane 2, thereby providing fluid passages 14p, and a hydrogen retrieval port 14d is provided communicating with the fluid passages 14p.

The anode-side separator 12 and the cathode-side separator 14 conduct electricity to the anode catalyst layer 4a and the cathode catalyst layer 4c through the anode power feeder 6a and the cathode power feeder 6c, respectively, and at the same time have a function of electrically connecting to an adjacent water electrolysis cell (omitted from illustration). In the water electrolysis device 100, multiple sets of the water electrolysis cells 20 are stacked in a direction in which the anode-side separator 12 and the cathode-side separator 14 face each other, and are clamped from both sides in the stacking direction by end plates (omitted from illustration).

When producing hydrogen gas by performing electrolysis of raw material water using the water electrolysis device 100 such as described above, first, raw material water is supplied from the water feed port 12f of the anode-side separator 12 to the fluid passages 12p thereof. At the same time, the anode-side separator 12 and the cathode-side separator 14 conduct electricity to the anode catalyst layer 4a and the cathode catalyst layer 4c through the anode power feeder 6a and the cathode power feeder 6c, respectively. Accordingly, hydrogen ions (H⁺), electrons, and oxygen gas (O₂) are generated by performing electrolysis of the raw material water at the anode catalyst layer 4a. Next, hydrogen ions permeate the solid polymer electrolyte membrane 2, which is a cation-permeable membrane, due to potential difference between the anode catalyst layer 4a and the cathode catalyst layer 4c, and migrate from the anode catalyst layer 4a side to the cathode catalyst layer 4c side. Hydrogen gas (H₂) is then obtained in the fluid passages 14p of the cathode-side separator 14 by the hydrogen ions receiving electrons from the cathode catalyst layer 4c and being molecularized. Hydrogen gas is extracted from the hydrogen retrieval port 14d. On the other hand, oxygen gas obtained in the fluid passages 12p of the anode-side separator 12 is discharged from the water drain port 12d along with the greater part of the raw material water.

Advantages of the anode-side separator 12 and the water electrolysis device 100 according to the first embodiment as described above will be described below.

Problems of a water electrolysis device when using an anode-side separator provided with an electroconductive oxide film containing indium tin oxide on the surface of a metal backing made of a general-purpose metal other than titanium and stainless steel (e.g., aluminum or the like) in the water electrolysis device 100 instead of the anode-side separator 12 according to the first embodiment, will be described. In a water electrolysis device, when using an anode-side separator in which an electroconductive oxide film is provided on the surface of a metal backing, generally, the electroconductive oxide film is a porous member, and accordingly the raw material water supplied to the fluid passage is permeates the electroconductive oxide film, resulting in contact in the raw material water between the electroconductive oxide film and the metal backing that contain different metals from each other. As a result, a corroded cell is formed among the electroconductive oxide film, the metal backing, and the raw material water, causing current to flow and galvanic corrosion to occur. Furthermore, when performing electrolysis of raw material water in a water electrolysis device, a high voltage of about 1.8 V, for example, is normally applied to the water electrolysis cells that are the component units, and accordingly the anode-side separator is exposed to a high-voltage environment. Under such circumstances, when an anode-side separator in which a general-purpose metal other than titanium or stainless steel is used is used as the metal backing, general-purpose metals other than titanium and stainless steel do not have sufficient corrosion resistance, and accordingly corrosion of the metal backing is accelerated due to galvanic corrosion thereof, and the corrosion resistance of the anode-side separator becomes problematic.

In contrast, in the water electrolysis device 100 according to the first embodiment, the thickness of the noble metal film 7 of the anode-side separator 12 according to the first embodiment is less than 10 nm, and accordingly the surface 9s of the electroconductive oxide film 9 may not be completely covered with the noble metal film 7, and the electroconductive oxide film 9 may be exposed in the raw material water. The term "thickness of noble metal film" refers to the average thickness of the noble metal film, which will be described later. When the electroconductive oxide film 9 is exposed in the raw material water, the electroconductive oxide film 9 and the metal backing 8 containing metals that are different from each other will come into contact in the raw material water. However, pure titanium used for the metal backing 8 has markedly higher corrosion resistance than general-purpose metals other than titanium and stainless steel. Therefore, even in a situation in which the electroconductive oxide film 9 and the metal backing 8 come into contact with each other in the raw material water, and a high voltage of around 1.8 V, for example, is applied to the water electrolysis cell, thereby exposing the anode-side separator 12 to a high voltage environment, corrosion of the metal backing 8 due to galvanic corrosion can be suppressed.

In addition, in the anode-side separator 12 according to the first embodiment, a surface 12s of the anode-side separator 12 is made of a surface 7s of the noble metal film 7, and accordingly contact resistance of the surface 12s of the anode-side separator 12 can be reduced in comparison with the anode-side separator in which the noble metal film 7 is not provided on the surface 9s of the electroconductive oxide film 9. Thus, electroconductivity of the anode-side separator 12 can be improved. Accordingly, performance of the water electrolysis device 100 according to the first embodiment can be improved.

Furthermore, in an anode-side separator in which the noble metal film is provided directly on the surface of the metal backing without the electroconductive oxide film, unlike the anode-side separator 12 according to the first embodiment, the surface of the metal backing may not be completely covered with the noble metal film when the thickness of the noble metal film is less than 10 nm. For this reason, in a water electrolysis device in which such an anode-side separator instead of the anode-side separator 12 according to the first embodiment is used in the water electrolysis device 100 according to the first embodiment, when electrolysis of the raw material water is performed, the surface of the metal backing is exposed in the raw material water, and accordingly a passivation film (oxide film) is formed on the exposed portion of the surface of the metal backing. Accordingly, as the water electrolysis device is used, formation of the passivation film on the exposed portions of the surface of the metal backing progresses, and the contact resistance on the surface of the anode-side separator increases. Thus, durability of the anode-side separator becomes problematic. In contrast, in the anode-side separator 12 according to the first embodiment, the noble metal film 7 is provided on the surface 8s of the metal backing 8 with the electroconductive oxide film 9 interposed therebetween, and accordingly, exposure of the surface 8s of the metal backing 8 to the raw material water is suppressed when electrolysis of the raw material water is performed by the water electrolysis device 100 according to the first embodiment, even though the thickness of the noble metal film 7 is less than 10 nm. Accordingly, increase in the contact resistance due to the formation of the passivation film progressing on the exposed portion of the surface 8s of the metal backing 8 can be suppressed. Thus, the durability of the anode-side separator 12 can be improved, and the durability of the water electrolysis device 100 can be improved.

On the other hand, in an anode-side separator in which the noble metal film is provided directly on the surface of the metal backing without the electroconductive oxide film being provided, unlike the anode-side separator 12 according to the first embodiment, when a thickness of the noble metal film is 10 nm or more, the material costs of the platinum used for the noble metal film rise, even though the surface of the metal backing is completely covered with the noble metal film. Conversely, in the anode-side separator 12 according to the first embodiment, the thickness of the noble metal film 7 is 5 nm or less, thereby reducing material costs of the platinum used for the noble metal film 7, and accordingly, costs can be reduced even when taking material costs of the electroconductive oxide film 9 into account.

In the anode-side separator according to the embodiment, titanium or stainless steel, which has markedly higher corrosion resistance than other general-purpose metals, is used for the metal backing as in the first embodiment. Accordingly, corrosion of the metal backing can be suppressed. Thus, in the water electrolysis device according to the embodiment, including the anode-side separator according to the embodiment enables of corrosion of the metal backing due to galvanic corrosion to be suppressed. In addition, in the anode-side separator according to the embodiment, the surface of the anode-side separator is made of the surface of the noble metal film as in the first embodiment, and accordingly the electroconductivity of the anode-side separator can be improved. Accordingly, the performance of the water electrolysis device according to the embodiment can be improved. Furthermore, in the anode-side separator according to the embodiment, when the thickness of the noble metal film is less than 10 nm, the durability can be improved in the same way as in the first embodiment, as compared with an anode-side separator in which the electroconductive oxide film is not provided and the thickness of the noble metal film is less than 10 nm. In addition, when the thickness of the noble metal film is 5 nm or less, costs can be reduced as in the first embodiment, as compared with an anode-side separator that is provided with no electroconductive oxide film and that includes a noble metal film with a thickness of 10 nm or more.

Next, configurations of the anode-side separator and the water electrolysis device according to the embodiment, and the method for producing hydrogen gas according to the embodiment, will be described in detail.

### 1. Anode-Side Separator

The anode-side separator according to the embodiment is an anode-side separator that is used in a water electrolysis device, and includes a metal backing made of titanium or stainless steel, an electroconductive oxide film containing ITO that is provided on the surface of the metal backing, and a noble metal film containing platinum (Pt) that is provided on the surface of the electroconductive oxide film. Here, the term "surface of the metal backing" means the outer surface of the metal backing, and may be one principal face of the metal backing or the other principal face of the metal backing. The metal backing, the electroconductive oxide film, the noble metal film, and others of the anode-side separator will be described in detail below.

### (1) Metal Backing

Examples of the titanium used for the metal backing include pure titanium and titanium alloys, although not limited thereto in particular. Examples of pure titanium include those defined in JIS H 4600:2012, although not limited thereto in particular. Examples of titanium alloys include Ti-Al, Ti-Nb, Ti-Ta, Ti-6Al-4V, and Ti-Pd, although not limited thereto in particular. As the titanium used for the metal backing, pure titanium is particularly preferable. This is because corrosion resistance thereof is particularly high.

Examples of stainless steel used for the metal backing include austenitic stainless steel such as SUS304 and SUS316, ferritic stainless steel such as SUS430, martensitic stainless steel such as SUS420, and so forth.

The shape of the metal backing is not limited in particular, as long as the shape thereof is that of a general metal backing that makes up an anode-side separator used in a general water electrolysis device, and the metal backing may have a shape in which grooves for fluid passages of the separator are provided. When the water electrolysis device is a water electrolysis device including solid polymer type water electrolysis cells, the shape of the metal backing provided with grooves for fluid passages may be a shape, for example, in which grooves for fluid passages are provided on the principal face side of the metal backing facing the solid polymer electrolyte membrane, as in the first embodiment. The shape of the metal backing may be a flat plate shape, in which grooves for fluid passages are not provided on the metal backing. Note that when the metal backing has a flat plate shape, for example, this makes up a flat type separator in which fluid passages are separated. The surface roughness Rz of the metal backing is, for example, in a range of 0.05 µm to 0.8 µm, preferably 0.1 µm or more, and more particularly 0.3 µm or more. The thickness of the metal backing is not limited in particular, and can be set in accordance with the material of the metal backing, taking into consideration strength, processing, and so forth, an example thereof being within the range of 0.1 mm to 1 mm.

### (2) Electroconductive Oxide Film

The electroconductive oxide film is not limited in particular, as long as ITO is contained therein, provided on the surface of the metal backing. When the water electrolysis device is a water electrolysis device including solid polymer type water electrolysis cells, the electroconductive oxide film preferably is provided on at least the principal face of the metal backing that faces the solid polymer electrolyte membrane, as in the first embodiment, for example, and may be provided on the entire surface of the metal backing.

An example of the thickness of the electroconductive oxide film is within a range of 0.05 µm to 0.8 µm, and more preferably 0.3 µm or more, although not limited thereto in particular. This is because when the thickness of the electroconductive oxide film is 0.05 µm or more, the electroconductive oxide film can be formed uniformly. This is further because corrosion resistance of the anode-side separator can be sufficiently secured even when the surface of the metal backing is roughened in a stamping step, due to the thickness of the electroconductive oxide film being 0.3 µm or more. This is moreover because, due to the thickness of the electroconductive oxide film being 0.8 µm or less on the other hand, peeling of the electroconductive oxide film away from the metal backing due to residual stress can be suppressed.

### (3) Noble Metal Film

The noble metal film is not limited in particular, as long as it contains platinum (Pt) that is provided on the surface of the electroconductive oxide film. The thickness of the noble metal film preferably is in a range of less than 10 nm. Durability can be improved as compared with an anode-side separator with no electroconductive oxide film and a noble metal film having a thickness of less than 10 nm. The noble metal film more preferably has a thickness in a range of 3 nm to 5 nm. This is because when the thickness of the noble metal film is 3 nm or more, the contact resistance on the surface of the anode-side separator can be sufficiently reduced, and when the thickness of the noble metal film is 5 nm or less, the costs can be reduced as compared with an anode-side separator that is provided with no electroconductive oxide film and the thickness of the noble metal film is 10 nm or more. That is to say, this range is preferable since both reduction in contact resistance and reduction in costs can be realized.

The term "thickness of noble metal film" refers to the average thickness of the noble metal film. Also, while the method for measuring the thickness of the noble metal film is not limited in particular, examples include a method of performing cross-sectional observation using transmission electron microscopy (TEM), field emission scanning electron microscopy (FE-SEM), or the like, a method of using Auger analysis, a method of using X-ray photoelectron spectroscopy (XPS) analysis, and so forth.

### (4) Manufacturing Method of Anode-Side Separator

Examples of the method for manufacturing the anode-side separator include the following manufacturing method or the like, although not limited thereto in particular. In one example of the manufacturing method, first, a metal backing made of titanium or stainless steel is prepared. Next, an electroconductive oxide film containing ITO is formed on the surface of the metal backing by ion plating, sputtering, or the like. Next, a noble metal film containing platinum (Pt) is formed on the surface of the electroconductive oxide film by physical vapor deposition (PVD). Thus, the anode-side separator is manufactured. Examples of PVD used for forming the noble metal film include ion plating, sputtering, and so forth.

### 2. Water Electrolysis Device

The water electrolysis device according to the embodiment is not limited in particular as long as it includes the anode-side separator according to the embodiment, and a water electrolysis device containing solid polymer type water electrolysis cells using a solid polymer electrolyte membrane, as in the water electrolysis device according to the first embodiment, for example, is preferred.

Examples of the solid polymer type water electrolysis cell include an arrangement including a membrane electrode assembly, an anode-side separator and a cathode-side separator, between which the membrane electrode assembly is interposed according to the embodiment, as in the water electrolysis cell according to the first embodiment. A water electrolysis device including such solid polymer type water electrolysis cells is usually configured by multiple sets of water electrolysis cells being laminated in the direction in which the anode-side separator and the cathode-side separator face each other, and water electrolysis cells that are adjacent to each other are electrically connected by the anode side separators and the cathode side separators. Examples of such a solid polymer type water electrolysis cell include an arrangement including a membrane electrode assembly that includes a solid polymer electrolyte membrane, an anode catalyst layer and a cathode catalyst layer respectively provided on one principal face and the other principal face of the solid polymer electrolyte membrane, an anode power feeder laminated on the anode catalyst layer, and a cathode power feeder laminated on the cathode catalyst layer, in which an anode-side separator is laminated on the principal face of the anode power feeder, and a cathode-side separator is laminated on the principal face of the cathode power feeder.

The solid polymer electrolyte membrane has functions of blocking the flow of electrons and gas, and also of causing hydrogen ions (H⁺) to migrate from the anode catalyst layer side to the cathode catalyst layer side. The solid polymer electrolyte membrane in an example includes an ion exchange membrane that is made of polymer electrolyte resin, which is a solid polymer material such as a perfluorosulfonic acid (PFSA) ionomer or the like, although not limited thereto in particular. In the ion exchange membrane, a polymer membrane having ion conductivity serves as an electrolyte.

The anode catalyst layer has functions of generating hydrogen ions, electrons, and oxygen gas from raw material water. The anode catalyst layer is made of, for example, a catalyst layer that includes a catalyst and an ionomer, and that is formed by coating the catalyst with the ionomer, although not limited thereto in particular. Examples of the catalyst include supported catalysts in which platinum group metals such as platinum, iridium, and ruthenium, alloys thereof, or the like, are supported on carrier particles, although not limited thereto in particular. Examples of the carrier particles include carbon carrier particles such as carbon black, although not limited thereto in particular. Note that the ionomer is made of, for example, a polymer electrolyte resin, which is a solid polymer material such as a fluororesin that is the same as the solid polymer electrolyte membrane, and has proton conductivity due to ion exchange groups thereof. Unlike the anode catalyst layer, the cathode catalyst layer has functions of converting hydrogen ions and electrons into hydrogen gas (H₂). The cathode catalyst layer is made of, for example, a catalyst layer that includes a catalyst and an ionomer, and that is formed by coating the catalyst with the ionomer, although not limited thereto in particular. The catalyst and the ionomer are the same as the catalyst and the ionomer of the anode catalyst layer.

Examples of a method for preparing a membrane electrode assembly include a method of forming an anode catalyst layer and a cathode catalyst layer on one principal face and the other principal face of a solid polymer electrolyte membrane, respectively, and further interposing the assembly obtained thereby between an anode power feeder and a cathode power feeder, and so forth. Note that examples of a method of forming the catalyst layer include a method of applying a coating liquid for forming a catalyst layer on a predetermined position of the principal face of the solid polymer electrolyte membrane, and performing drying thereof as necessary, and so forth. The coating liquid for forming the catalyst layer is a liquid in which a catalyst and an ionomer are dispersed in a dispersion medium.

The anode power feeder and the cathode power feeder are not limited in particular, as long as they are electroconductive members having gas permeability, and for example are made up of a porous material having electroconductivity, specifically, a porous metal material such as a sintered compact of titanium powder or the like, a porous fiber material such as carbon fiber, graphite fiber, or the like, and so forth.

The anode-side separator is as described in the above item "1. Anode-side separator". Examples of the cathode-side separator include those including a metal backing made of titanium, stainless steel, aluminum, or the like. The shape of the metal backing included in the cathode-side separator is not limited in particular, as long as the shape thereof is that of a general metal backing that makes up a cathode-side separator used in a general water electrolysis device. The thickness of the metal backing included in the cathode-side separator is not limited in particular, and can be set in accordance with the material of the metal backing, taking into consideration strength, processing, and so forth, an example thereof being within a range of 0.1 mm to 1 mm.

### 3. Hydrogen Gas Production Method

In the method for producing hydrogen gas according to the embodiment, the water electrolysis device according to the embodiment is used to produce hydrogen gas by performing electrolysis of raw material water. While the method for producing hydrogen gas is not limited in particular, a method using raw material water pH of which is in a range of 4 to 7 (neutral) is preferable. The reason is that using raw material water pH of which is 4 or more suppresses dissolution of the ITO contained in the electroconductive oxide film of the anode-side separator provided in the water electrolysis device, and the contact resistance of the anode-side separator can be kept from becoming high.

The anode-side separator and the water electrolysis device according to the embodiment will be described below more specifically with reference to Examples and Comparative Examples.

### Example 1

First, a metal backing was prepared by punching out a 5 cm × 6 cm region to serve as a channel portion of a metal backing (100 µm thick) made of pure titanium, which is used in actual anode-side separator products. Next, an electroconductive oxide film containing ITO is formed to a thickness of 100 nm on one principal face of the metal backing by ion plating. Next, a noble metal film containing platinum (Pt) was formed to a thickness of 5 nm on the surface of the electroconductive oxide film by ion plating. Thus, a test sample of the anode-side separator was prepared.

### Example 2

A test sample of the anode-side separator was prepared in the same way as in Example 1, except that the noble metal film was formed to a thickness of 3 nm.

### Comparative Example 1

First, a metal backing was prepared in the same way as in Example 1. Next, an electroconductive oxide film was formed on one principal face of the metal backing, in the same way as in Example 1. Thus, a test sample of the anode-side separator was prepared.

### Comparative Example 2

First, a metal backing was prepared in the same way as in Example 1. Next, a noble metal film containing platinum (Pt) was formed to a thickness of 30 nm on one principal face of the metal backing by ion plating. Thus, a test sample of the anode-side separator was prepared.

### Comparative Examples 3 to 5

In Comparative Example 3, a test sample of the anode-side separator was prepared in the same way as in Comparative Example 2, except that the noble metal film was formed to a thickness of 10 nm. In Comparative Example 4, a test sample of the anode-side separator was prepared in the same way as in Comparative Example 2, except that the noble metal film was formed to a thickness of 5 nm. In Comparative Example 5, a test sample of the anode-side separator was prepared in the same way as in Comparative Example 2, except that the noble metal film was formed to a thickness of 3 nm.

### Comparative Example 6

First, a metal backing was prepared in the same way as in Example 1. The metal backing was then used alone as a test sample of the anode-side separator.

### Contact Resistance Prior to Durability Test

The test samples of Examples 1 and 2, and Comparative Examples 1 to 6, were subjected to measurement of contact resistance (mΩ·cm²) prior to the durability test. Specifically, a carbon sheet (TGP-H-060, manufactured by Toray Industries, Inc.) was placed on the surfaces of the test samples (the surface of the noble metal film (Examples 1 and 2 and Comparative Examples 2 to 5), or the surface of the electroconductive oxide film (Comparative Example 1), or one principal face of the metal backing (Comparative Example 6)), and a constant load (1 MPa) was applied by a measuring jig. In this state, an electric current from an electric power supply was adjusted by an ammeter such that the electric current flowing through the test samples was 1 A, the voltage applied to the test samples was measured by a voltmeter, and the contact resistance between the test samples and the carbon sheet was calculated.

### Contact Resistance Following Durability Test

The test samples of Examples 1 and 2 and Comparative Examples 1 to 6 were subjected to a durability test (constant potential corrosion test) in accordance with the Japanese Industrial Standards "Method for high-temperature electrochemical corrosion test of metallic materials in molten salts" (JIS Z 2294:2004). Specifically, the test sample was immersed in a corrosive solution (aqueous solution of dilute sulfuric acid) of which the temperature was adjusted to 80°C by temperature-controlled water, and of which pH was adjusted to 4 by adjusting the amount of sulfuric acid. In this state, a potential difference of 2 V was generated between a counter electrode made of a titanium plate and the test sample (sample electrode) in a two-electrode system by electrically connecting the counter electrode and the test sample, and the test time was run for 135 hours, to allow the test sample to corrode.

The contact resistance (mΩ·cm²) was obtained for the test samples of Examples 1 and 2 and Comparative Examples 1 to 6 following the durability test thereof, by measurement in the same way as the method for obtaining the contact resistance prior to the durability test.

### Cost of Membrane Material

The total material costs of the electroconductive oxide film and the noble metal film in the test samples of Examples 1 and 2 and Comparative Examples 1 to 6 were calculated as the film material costs of each of the test samples of Examples 1 and 2 and Comparative Examples 1 to 6.

### Evaluation

The contact resistances prior to the durability test and following the durability test, and the film material costs, are shown for the test samples of Examples 1 and 2 and Comparative Examples 1 to 6, in Table 1 below, along with the configuration of the films, and the thicknesses of the electroconductive oxide film and the noble metal film.

**Table 1**

| | Film configuration | Electroconductive oxide film thickness (nm) | Noble metal film thickness (nm) | Contact resistance prior to durability test (mΩ•cm²) | Contact resistance following durability test (mΩ•cm²) | Film material cost |
|---|---|---|---|---|---|---|
| Example 1 | Electroconductive oxide film + noble metal film | 100 | 5 | 1.6 | 2.1 | low |
| Example 2 | Electroconductive oxide film + noble metal film | 100 | 3 | 1.4 | 1.9 | low |
| Comparative Example 1 | Electroconductive oxide film | 100 | 0 | 3.6 | 5.6 | low |
| Comparative Example 2 | Noble metal film | 0 | 30 | 1.6 | 1.8 | high |
| Comparative Example 3 | Noble metal film | 0 | 10 | 1.5 | 1.7 | high |
| Comparative Example 4 | Noble metal film | 0 | 5 | 1.4 | 10.1 | low |
| Comparative Example 5 | Noble metal film | 0 | 3 | 1.6 | 12.7 | low |
| Comparative Example 6 | No film | 0 | 0 | 7 | 311 | 0 |

| | | | | | | |
|---|---|---|---|---|---|---|
| * 1 Standard value of contact resistance < 3 mΩ•cm² *2 For film material cost, "low" falls within a range of standard value. "High" exceeds the range of standard value. | | | | | | |

As shown in Table 1 above, in the test samples of Examples 1 and 2 including the electroconductive oxide film and the noble metal film, the contact resistance both prior to the durability test and following the durability test was reduced to within the range of the standard values, unlike as in the test sample of Comparative Example 1 including the electroconductive oxide film but no noble metal film.

Also, in the test samples of Examples 1 and 2, which include the electroconductive oxide film and have a noble metal film thickness of less than 10 nm, increase in contact resistance after the durability test is suppressed, unlike as in the test samples of Comparative Examples 4 and 5 that are provided with no electroconductive oxide film and have a noble metal film thickness of less than 10 nm. Further, in the test samples of Examples 1 and 2, which include the electroconductive oxide film and have a noble metal film thickness of 5 nm or less, the material costs were lowered to within the range of the standard values, unlike as in the test samples of Comparative Examples 2 and 3 that are provided with no electroconductive oxide film and have a noble metal film thickness of 10 nm or more.

Although embodiments of the anode-side separator and the water electrolysis device according to the invention have been described in detail above, the invention is not limited to the above-described embodiments, and various design changes can be made without departing from the spirit of the invention described in the claims.

## Claims

1. An anode-side separator (12) that is used in a water electrolysis device (100), the anode-side separator (12) comprising:
a metal backing (8) made of titanium or stainless steel;
an electroconductive oxide film (9) provided on a surface (8s) of the metal backing (8), the electroconductive oxide film (9) containing indium tin oxide; and
a noble metal film (7) provided on a surface (9s) of the electroconductive oxide film (9), the noble metal film (7) containing platinum.

2. The anode-side separator (12) according to claim 1, wherein a thickness of the noble metal film (7) is less than 10 nm.

3. The anode-side separator (12) according to claim 2, wherein the thickness of the noble metal film (7) is 3 nm or more and 5 nm or less.

4. The anode-side separator (12) according to any one of claims 1 to 3, wherein a thickness of the electroconductive oxide film (9) is 0.05 µm or more and 0.8 µm or less.

5. The anode-side separator (12) according to claim 4, wherein the thickness of the electroconductive oxide film (9) is 0.3 µm or more and 0.8 µm or less.

6. A water electrolysis device (100) comprising the anode-side separator (12) according to any one of claims 1 to 5.
